# EUROPÄISCHE PATENTSCHRIFT

(11) **EP 2 958 769 B1**
(45) Veröffentlichungstag und Bekanntmachung des Hinweises auf die Patenterteilung: **02.10.2019**
(21) Anmeldenummer: 14705798.8
(22) Anmeldetag: 24.02.2014
(51) Int. Cl.: B60N 2/235, B60N 2/20

(54) **BESCHLAG FÜR EINEN FAHRZEUGSITZ, VERFAHREN ZUR MONTAGE EINES BESCHLAGS FÜR EINEN FAHRZEUGSITZ SOWIE FAHRZEUGSITZ**
FITTING FOR A VEHICLE SEAT, METHOD FOR ASSEMBLING A FITTING FOR A VEHICLE SEAT, AND VEHICLE SEAT
FERRURE POUR UN SIÈGE DE VÉHICULE, PROCÉDÉ DE MONTAGE D'UNE FERRURE POUR UN SIÈGE DE VÉHICULE AINSI QUE SIÈGE DE VÉHICULE

(30) Priorität: 25.02.2013 DE 102013003442; 16.12.2013 DE 102013226002
(43) Veröffentlichungstag der Anmeldung: 30.12.2015
(73) Patentinhaber: Adient Luxembourg Holding S.à r.l., 1855 Luxembourg (LU)
(72) Erfinder: THIEL, Peter, 42899 Remscheid (DE)
(74) Vertreter: Liedhegener, Ralf
(86) Internationale Anmeldenummer: PCT/EP2014/053536
(87) Internationale Veröffentlichungsnummer: WO 2014/128297

(56) Entgegenhaltungen:
- DE-A1- 10 041 604

## Beschreibung

Die Erfindung betrifft einen Beschlag mit den Merkmalen des Oberbegriffs des Anspruchs 1, ein Verfahren zur Montage eines Beschlags für einen Fahrzeugsitz nach Anspruch 10 sowie einen Fahrzeugsitz nach Anspruch 14.

### Stand der Technik

Ein Beschlag dieser Art ist aus der US 7,571,962 B2 bekannt. Das erste Beschlagteil und das zweite Beschlagteil stehen miteinander in Getriebeverbindung, um die Neigung der Lehne innerhalb eines Komforteinstellbereichs einzustellen. Auf einem am ersten Beschlagteil befestigten Lagerring ist das dritte Beschlagteil schwenkbar gelagert. Ferner sitzt ein separat ausgebildetes Rastelement auf dem Lagerring und ist an diesem befestigt, so dass es fest mit dem ersten Beschlagteil verbunden ist. Eine am dritten Beschlagteil schwenkbar gelagerte, gezahnte Klinke verriegelt mit dem Rastelement, welches hierzu in einem radial abstehenden Bereich ebenfalls gezahnt ist. Wird die Klinke geöffnet, ist die Lehne freischwenkbar. Das Freischwenken dient insbesondere dem erleichterten Zugang von Passagieren zu einer hinteren Sitzreihe und ergänzt damit den Komforteinstellbereich in sinnvoller Weise. Das dritte Beschlagteil sitzt mit geringem Spiel auf dem Lagerring. Dieses Spiel ist für den Sitzbenutzer an der Lehnenoberkante deutlich spürbar, was das subjektive Qualitätsempfinden reduziert.

Aus der DE 100 41 604 B4 ist ein gattungsgemäßer Beschlag mit einer Lagerbuchse und einem auf dieser Lagerbuchse gelagerten dritten Beschlagteil bekannt. Während der Montage des Beschlags wird durch Verdrehen der Lagerbuchse relativ zum dritten Beschlagteil vor der Befestigung der Lagerbuchse an einem ersten Beschlagteil ein vorhandenes Spiel in der Lagerstelle und in der Verriegelung definiert justiert. Dazu sind insgesamt drei Erhebungen auf der Lagerfläche der Lagerbuchse und drei Erhebungen auf einer Innenfläche einer auf der Lagerbuchse gelagerten Öffnung des dritten Beschlagteils vorgesehen, die in einem verriegelten Zustand einer Freischwenkfunktion weitgehend aneinander anliegen, so dass vorhandenes Spiel weitgehend eliminiert wird. Beim Freischwenken der Lehne, das heißt beim Verschwenken des dritten Beschlagteils relativ zur Lagerbuchse, entsteht ein zum Freischwenken notwendiges Spiel, da durch die Drehung der Innenfläche der Öffnung relativ zur Lagerbuchse sich die Erhebungen nicht mehr berühren. Um das Spiel genau einstellen zu können, wird eine Montagestellung gewählt, in der das dritte Beschlagteil mit dem ersten Beschlagteil über eine Klinke miteinander gekuppelt sind. Sodann wird die Lagerbuchse so weit gedreht, bis die Erhebungen der Lagerbuchsen die Erhebungen an der Innenfläche der Öffnung des dritten Beschlagteils berühren. Daraufhin wird die Lagerbuchse wieder um 1,3 Grad zurückgedreht und danach an dem ersten Beschlagteil verschweißt. Durch das Zurückdrehen der Lagerbuchse wird ein Verklemmen in der Lagerstelle oder der Verriegelung vermieden, jedoch kann das vorhandene Spiel dadurch nicht vollständig minimiert oder gar eliminiert werden.

### Aufgabe

Der Erfindung liegt die Aufgabe zu Grunde, einen Beschlag der eingangs genannten Art zu verbessern, insbesondere eine optimierte Spielfreistellung in der Lagerstelle des dritten Beschlagteils zur Verfügung zu stellen, indem während der Montage des Beschlags auf ein Zurückdrehen der Lagerbuchse verzichtet werden kann. Der Erfindung liegt zudem die Aufgabe zu Grunde, ein Verfahren für die Montage eines solchen Beschlags zur Verfügung zu stellen und einen Fahrzeugsitz mit einem entsprechenden Beschlag zur Verfügung zu stellen.

### Lösung

Diese Aufgabe wird gelöst durch einen Beschlag mit einem ersten Beschlagteil und einem zweiten Beschlagteil, welche relativ zueinander verdrehbar sind und miteinander in Getriebeverbindung stehen oder miteinander verriegelbar sind und einem dritten Beschlagteil, welches relativ zu dem ersten Beschlagteil auf einem an dem ersten Beschlagteil befestigten Lagerring um eine Achse schwenkbar gelagert ist, wobei das dritte Beschlagteil mittels einer in einem ersten Gelenkpunkt an dem dritten Beschlagteil gelagerten Klinke mit dem ersten Beschlagteil oder einem mit dem ersten Beschlagteil fest verbundenen Bauteil verriegelbar ist, Erfindungsgemäß ist vorgesehen, dass der Lagerring mehrere Anlaufnocken aufweist, die mit mehreren Erhebungen des dritten Beschlagteils derart zusammenwirken, dass bei verriegelter Klinke ein freies Spiel in radialer Richtung zwischen dem Lagerring und dem dritten Beschlagteil minimiert ist.

Der Zustand "bei verriegelter Klinke" bedeutet, dass das dritte Beschlagteil mittels der Klinke relativ zu dem ersten Beschlagteil gegen eine Relativverdrehung gesichert ist.

Dadurch, dass der Lagerring mehrere Anlaufnocken aufweist, die mit mehreren Erhebungen des dritten Beschlagteils derart zusammenwirken, dass bei verriegelter Klinke ein freies Spiel in radialer Richtung zwischen dem Lagerring und dem dritten Beschlagteil minimiert, insbesondere eliminiert ist, steht eine optimierte Spielfreistellung in der Lagerstelle des dritten Beschlagteils zur Verfügung. Es ist für die Fachwelt überraschend, dass der Lagerring in einer Relativposition zu dem dritten Beschlagteil, die einem minimierten Spiel entspricht, an dem ersten Beschlagteil befestigt werden kann. Der Lagerring muss vor seiner Befestigung an dem ersten Beschlagteil nicht - wie in der DE 100 41 604 B4 als notwendig beschrieben - gegenüber dieser Position zurückgedreht werden.

Die Klinke kann unmittelbar mit einer Kontur des ersten Beschlagteils verriegeln. Es ist jedoch auch möglich, dass die Klinke mit einer Kontur eines mit dem ersten Beschlagteil fest verbundenen Bauteils verriegelnd zusammen wirkt.

Das erste und das zweite Beschlagteil sowie die zwischen diesen aufgenommenen Bauteile können einen an sich bekannten Getriebebeschlag bilden, der auch als Taumelbeschlag bezeichnet wird. Die insbesondere durch den Lagerring, das dritte Beschlagteil und die Klinke gebildete Freischwenkvorrichtung des erfindungsgemäßen Beschlags kann modular an einem solchen Getriebebeschlag befestigt sein.

Das erste und das zweite Beschlagteil sowie die zwischen diesen aufgenommenen Bauteile können einen an sich bekannten Rastbeschlag bilden. Die insbesondere durch den Lagerring, das dritte Beschlagteil und die Klinke gebildete Freischwenkvorrichtung des erfindungsgemäßen Beschlags kann modular an einem solchen Rastbeschlag befestigt sein. Ein Beschlagsystem mit einer Memorisierung der Lehnenneigung und einer zusätzlichen Freischwenkvorrichtung an einem von zwei Rastbeschlägen ist beispielsweise aus der DE 10 2008 026 176 A1 bekannt.

Vorteilhafte Ausgestaltungen, welche einzeln oder in Kombination miteinander eingesetzt werden können, sind Gegenstand der Unteransprüche.

Indem der Lagerring genau drei Anlaufnocken und das dritten Beschlagteils genau drei Erhebungen aufweist, kann ein statisch bestimmtes System zur Spielfreistellung in der Art eines Dreibeins zur Verfügung gestellt werden.

Die drei Anlaufnocken des Lagerrings weisen ausgehend von einer radial nach außen weisenden Lagerfläche vorzugsweise radial nach außen. Die drei Anlaufnocken weisen vorzugsweise in Richtung des dritten Beschlagteils, insbesondere in Richtung einer Begrenzungsfläche einer Öffnung in dem dritten Beschlagteil. Die drei Erhebungen des dritten Beschlagteils weisen vorzugsweise radial nach innen in Richtung des Lagerrings. Die drei Erhebungen des dritten Beschlagteils weisen vorzugsweise ausgehend von einer Begrenzungsfläche einer Öffnung in dem dritten Beschlagteil radial nach innen in Richtung des Lagerrings.

An dem dritten Beschlagteil ist ein Exzenterbolzen befestigt, der im verriegelten Zustand der Klinke spielfrei an einem Vorsprung des ersten Beschlagteils oder an einem mit dem ersten Beschlagteil verbundenen Bauteil anliegt. Vorzugsweise umfasst der Exzenterbolzen einen sich in axialer Richtung erstreckenden ersten Bolzenabschnitt, der in eine Öffnung des dritten Beschlagteils eingesteckt ist, und einen sich in axialer Richtung, aber parallel versetzt erstreckenden zweiten Bolzenabschnitt, der im verriegelten Zustand der Klinke spielfrei an dem ersten Beschlagteil anliegt. Der erste Bolzenabschnitt und der zweite Bolzenabschnitt sind dadurch in radialer Richtung um eine erste Exzentrizität versetzt zueinander angeordnet. Dadurch kann während des Montageprozesses ein Spiel zwischen dem zumindest im Crashfall als Anschlag dienenden Exzenterbolzen und dem Vorsprung des ersten Beschlagteils eliminiert werden.

Im verriegelten Zustand der Klinke nehmen die Klinke und der Exzenterbolzen den Vorsprung des ersten Beschlagteils vorzugsweise zwischen sich auf.

An dem dritten Beschlagteil ist zudem ein Lagerbolzen befestigt, der den ersten Gelenkpunkt zur Lagerung der Klinke bildet. Der Lagerbolzen kann rotationssymmetrisch ohne Exzentrizität ausgebildet sein. In bevorzugter Ausführung umfasst der Lagerbolzen jedoch einen sich in axialer Richtung erstreckenden ersten Lagerbolzenabschnitt, der in eine Öffnung des dritten Beschlagteils eingesteckt ist, und einen sich in axialer Richtung erstreckenden zweiten Lagerbolzenabschnitt, der die Klinke lagert. Der erste Lagerbolzenabschnitt und der zweite Lagerbolzenabschnitt sind dadurch in radialer Richtung um eine zweite Exzentrizität versetzt zueinander angeordnet. Dadurch lässt sich die Klinke spielfrei stellen.

Die Verriegelung der Freischwenkvorrichtung, das heißt die Sicherung der Klinke in deren verriegelnder Position, kann dadurch besonders sicher erreicht werden, indem das dritte Beschlagteil, ein in einem zweiten Gelenkpunkt an dem dritten Beschlagteil gelagerter Sperrnocken, eine in einem dritten Gelenkpunkt mit dem Sperrnocken und in einem vierten Gelenkpunkt mit der Klinke gelenkig verbundene Koppel, und die Klinke, eine Viergelenkkette definieren. Die Getriebeglieder der Viergelenkkette müssen nicht über reine Drehgelenke miteinander verbunden sein. Bevorzugt ist einer der Gelenkpunkte der Viergelenkkette als Drehschubgelenk ausgebildet und die übrigen Gelenkpunkte als reine Drehgelenke. Dadurch lässt sich eine Verriegelung der Klinke über die Totpunktlage hinaus erreichen. Besonders wirkungsvoll ist es, wenn der zweite Gelenkpunkt als Drehschubgelenk ausgebildet ist und die übrigen Gelenkpunkte als Drehgelenke ausgebildet sind.

Ein zwangsläufig aufgrund des Drehschubgelenkes vorhandenes Spiel in der Viergelenkkette hat keine negativen Auswirkungen auf die Spielfreiheit der Verriegelung im Normalbetrieb des Sitzes, wenn eine Feder die Viergelenkkette, insbesondere den Sperrnocken, in Richtung der verriegelten Position der Klinke vorspannt und den Sperrnocken in Anlage an die Klinke schwenkt. Ein als Spannfläche, vorzugsweise innerhalb der Selbsthemmung, ausgelegter Verriegelungsnocken der Klinke wird dadurch gegen die Verriegelungsfläche des ersten Beschlagteils gespannt, ohne dass das Drehschubgelenk durch eine maximale Auslenkung in der Translationsrichtung spielfrei gestellt werden muss.

Die Totpunktlage lässt sich besonders einfach erzeugen, indem im verriegelten Zustand der Klinke der dritte Gelenkpunkt auf einer imaginären Verbindungslinie zwischen dem zweiten Gelenkpunkt und dem vierten Gelenkpunkt liegt oder der dritte Gelenkpunkt zwischen der Verbindungslinie und der Klinke liegt.

Die Aufgabe wird zudem durch ein Verfahren zur Montage eines erfindungsgemäßen Beschlags gelöst, das mindestens die drei nachfolgend genannten Verfahrensschritte umfasst. Erstens ein Vorpositionieren des ersten Beschlagteils, des dritten Beschlagteils und des Lagerrings in eine Relativlage zueinander, die zumindest annähernd einer verriegelten Position der Klinke entspricht. Zweitens ein Verdrehen des Lagerrings relativ zu dem dritten Beschlagteil, bis die Anlaufnocken und die Erhebungen spielfrei aneinander anliegen, und drittens ein anschließendes Fixieren des Lagerrings an dem ersten Beschlagteil. Vorzugsweise erfolgt das Fixieren des Lagerrings an dem ersten Beschlagteil mittels Laserschweißens.

In einem optionalen weiteren Verfahrensschritt kann ein Exzenterbolzen soweit gedreht werden, bis der Exzenterbolzen spielfrei an einem Vorsprung des ersten Beschlagteils oder eines mit dem ersten Beschlagteil verbundenen weiteren Bauteils anliegt und der Exzenterbolzen anschließend in dieser Lage an dem dritten Beschlagteil fixiert wird. Ein zunächst separat ausgebildetes Bauteil hat gegenüber einem in das erste Beschlagteil integrierten Vorsprung dann Vorteile, wenn das erste Beschlagteil auch für Beschläge ohne Freischwenkvorrichtung zum Einsatz kommen soll, das heißt Bestandteil eines Baukastens ist.

Die Klinke lässt sich spielfrei einstellen, indem in einem optionalen weiteren Verfahrensschritt der erste Gelenkpunkt durch einen Lagerbolzen gebildet ist und der Lagerbolzen einen sich in axialer Richtung erstreckenden ersten Lagerbolzenabschnitt umfasst, der in eine Öffnung des dritten Beschlagteils eingesteckt wird, und einen sich parallel zur Achse erstreckenden zweiten Lagerbolzenabschnitt zur Lagerung der Klinke umfasst, und der Lagerbolzen soweit gedreht wird, bis die Klinke spielfrei an einem Vorsprung, insbesondere dem Vorsprung des ersten Beschlagteils, anliegt und der Lagerbolzen anschließend in dieser Lage an dem dritten Beschlagteil fixiert wird.

Die Aufgabe wird zudem durch einen Fahrzeugsitz mit einem Sitzteil und einer Lehne gelöst, die mittels eines erfindungsgemäßen Beschlags miteinander verbunden sind.

### Figuren und Ausführungsformen der Erfindung

Im Folgenden ist die Erfindung anhand zweier in den Zeichnungen dargestellter vorteilhafter Ausführungsbeispiele und einer Abwandlung des ersten Ausführungsbeispiels näher erläutert. Die Erfindung ist jedoch nicht auf diese Ausführungsbeispiele beschränkt. Es zeigen:
- Fig. 1:: eine schematische Darstellung eines Fahrzeugsitzes,
- Fig. 2:: eine perspektivische Ansicht zweier Beschläge gemäß einem ersten Ausführungsbeispiel,
- Fig. 3:: eine schematische Explosionsdarstellung eines der Beschläge aus Fig.2 inklusive Adapter,
- Fig. 4:: eine Explosionsdarstellung der scheibenförmigen Einheit des Beschlags aus Fig. 3 zur Einstellung der Lehnenneigung innerhalb eines Komforteinstellbereichs, mit einem vereinfacht dargestellten ersten Beschlagteil,
- Fig. 5:: eine Draufsicht auf den Beschlag des ersten Ausführungsbeispiels,
- Fig. 6:: einen Schnitt durch den Beschlag entlang der Linie VI - VI in Fig. 5,
- Fig. 7:: einen Schnitt durch den Beschlag entlang der Linie VII - VII in Fig. 5,
- Fig. 8:: einen Schnitt durch den Beschlag entlang der Linie VIII - VIII in Fig. 5,
- Fig. 9:: eine Draufsicht auf den Beschlag aus Fig. 5 im verriegelten Zustand der Freischwenkvorrichtung ohne Deckel und ohne Rückhaltefeder,
- Fig. 10:: eine Fig. 9 entsprechende Ansicht während des Entriegelns der Freischwenkvorrichtung,
- Fig. 11:: eine Fig. 9 entsprechende Ansicht der vollständig entriegelten Freischwenkvorrichtung und
- Fig. 12:: eine Fig. 9 entsprechende Ansicht der entriegelten Freischwenkvorrichtung während des Freischwenkens der Lehne,
- Fig. 13:: eine Fig. 9 entsprechende Detailansicht einer Abwandlung des ersten Ausführungsbeispiels im verriegelten Zustand,
- Fig. 14:: eine Fig. 10 entsprechende Ansicht der Abwandlung des ersten Ausführungsbeispiels während des Entriegelns der Freischwenkvorrichtung,
- Fig. 15:: eine Fig. 11 entsprechende Ansicht der Abwandlung des Ausführungsbeispiels mit vollständig entriegelter Freischwenkvorrichtung,
- Fig. 16:: eine Fig. 12 entsprechende Ansicht der Abwandlung des Ausführungsbeispiels während des Freischwenkens der Lehne,
- Fig. 17:: eine Draufsicht auf den Beschlag aus Fig. 13 in einer der Figur 13 entgegengesetzten Blickrichtung,
- Fig. 18:: eine Detailansicht auf die Lagerstelle zwischen dem Lagerring und dem dritten Beschlagteil in Schnittdarstellung, wobei die Schnittebene senkrecht zu einer axialen Erstreckung des Beschlags durch den Lagerring verläuft, und
- Fig. 19:: eine perspektivische Ansicht eines für alle Ausführungsbeispiele geeigneten Lagerbolzens,
- Fig. 20:: eine perspektivische Ansicht eines für alle Ausführungsbeispiele geeigneten Exzenterbolzens,
- Fig.21:: eine Fig. 13 entsprechende Ansicht mit einem in der Fig. 19 dargestellten Lagerbolzen und einem in der Fig. 20 dargestellten Exzenterbolzen und
- Fig. 22:: eine schematische Explosionsdarstellung eines zweiten Ausführungsbeispiels mit einer als Rastbeschlag ausgebildeten scheibenförmigen Einheit.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 umfasst ein erstes Beschlagteil 11, ein zweites Beschlagteil 12 und eine Freischwenkvorrichtung mit einem dritten Beschlagteil 74. Zunächst wird der Aufbau und die Funktionsweise des ersten Beschlagteils 11 und des zweiten Beschlagteils 12 bei verriegelter Freischwenkvorrichtung beschrieben.

Die beiden Beschlagteile 11 und 12 sind relativ zueinander verdrehbar und lassen sich jeweils näherungsweise in eine kreisrunde Scheibenform einbeschreiben. Einzelne, nachfolgend noch beschriebene Funktionsgeometrien stehen in radialer Richtung über die kreisrunde Grundgeometrie des ersten Beschlagteils 11 über. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 A beschrieben. Der vorzugsweise metallische Umklammerungsring 13 ist fest mit einem der beiden Beschlagteile 11 und 12 verbunden, vorliegend mit dem ersten Beschlagteil 11 in einem äußeren Randabschnitt, beispielsweise verschweißt oder (in Umfangsrichtung wenigstens teilweise) umgebördelt.

Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern, d.h. der Umklammerungsring 13 und das mit ihm fest verbundene Beschlagteil 11 oder 12 umklammern das relativ zu ihnen bewegliche, andere der beiden Beschlagteile 11 und 12. In baulicher Hinsicht bilden die beiden Beschlagteile 11 und 12 daher zusammen mit dem Umklammerungsring 13, und in einem Bauraum zwischen den Beschlagteilen 11 und 12 aufgenommenen weiteren Getriebebauteilen, eine scheibenförmige Einheit, die eine an sich bekannte und auch ohne zusätzliche Freischwenkvorrichtung funktionsfähige Einheit zur Einstellung der Lehnenneigung innerhalb eines Komforteinstellbereichs bildet. Der Beschlag 10 ist somit modular aufgebaut, indem eine zusätzliche Freischwenkvorrichtung an einen an sich bekannten Beschlag adaptiert wird.

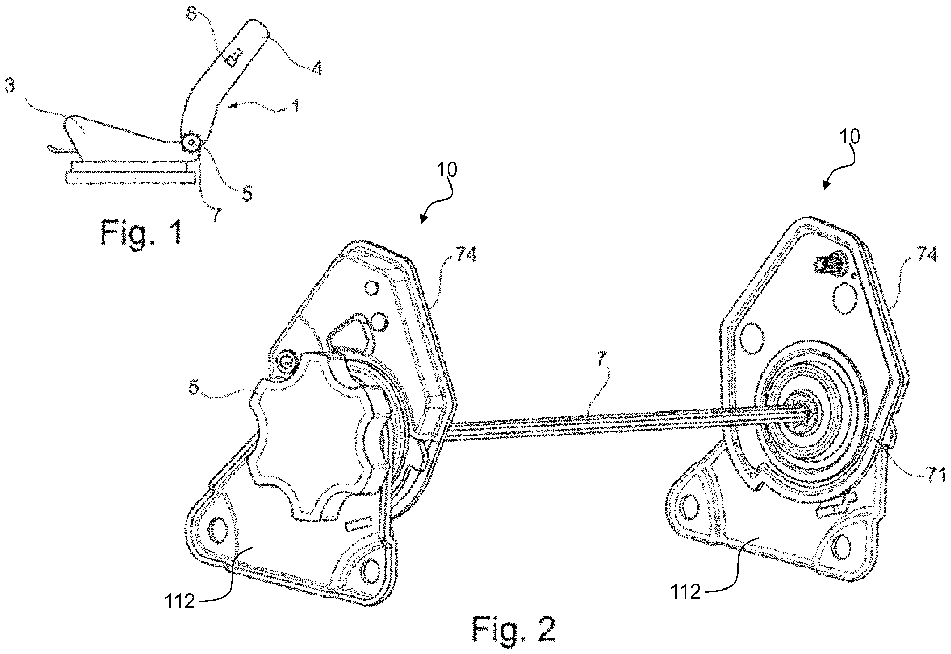

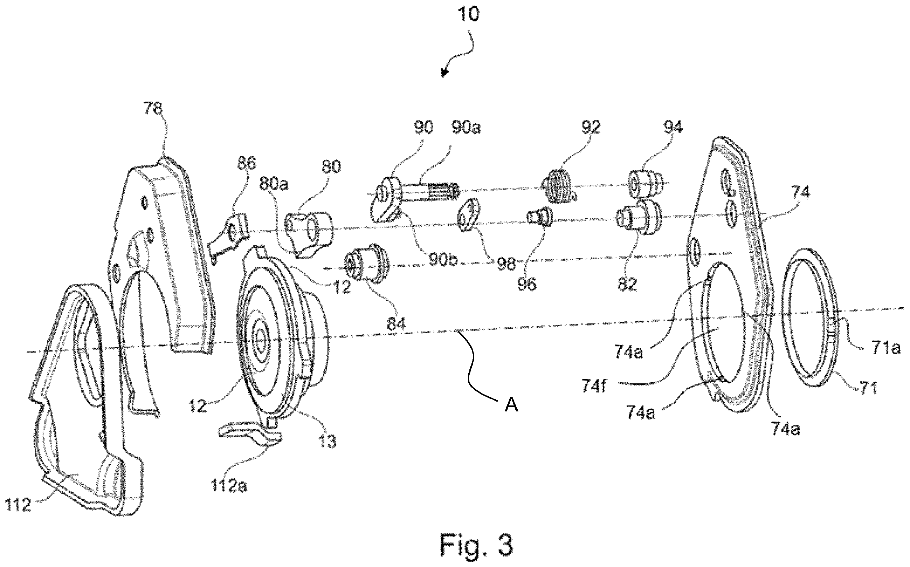

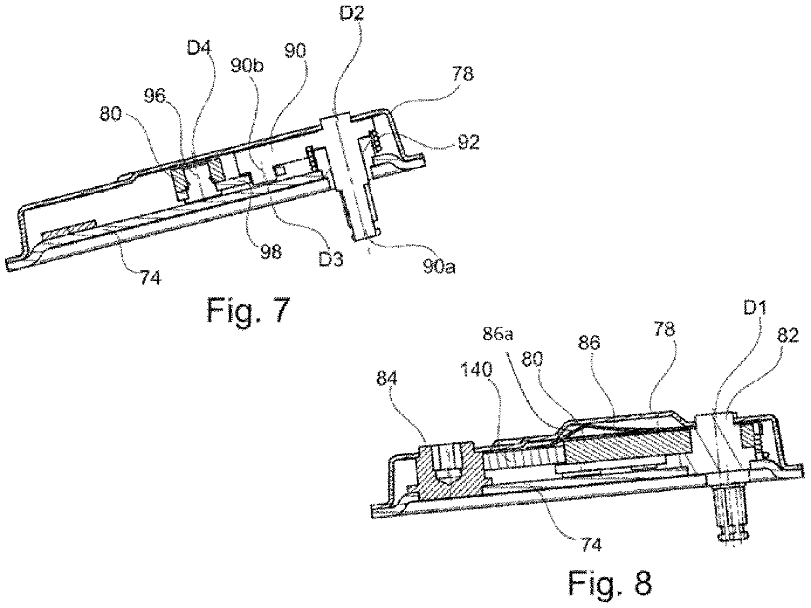

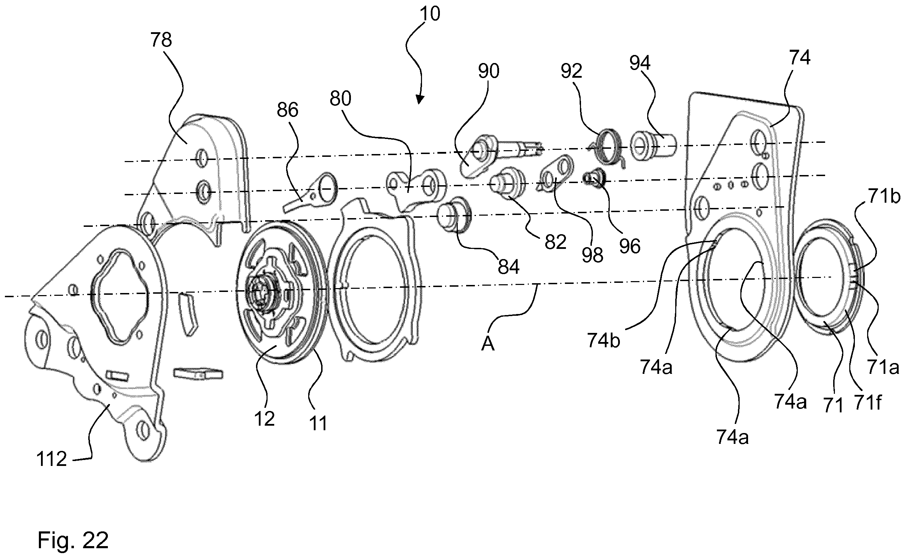

Nach der Befestigung des Beschlags 10 an den Fahrzeugsitz 1 steht das erste Beschlagteil 11 in (verriegelter) Verbindung mit der Lehne 4, solange die nachfolgend noch näher beschriebene Freischwenkvorrichtung nicht entriegelt ist. Das zweite Beschlagteil 12 ist fest über einen Adapter 112 mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 stünde in Verbindung mit der Lehne 4. Der Beschlag 10 liegt im Kraftfluss zwischen Lehne 4 und Sitzteil 3, weshalb die beiden Beschlagteile 11 und 12 aus Metall bestehen, vorzugsweise aus Stahl. Der Beschlag 10 umfasst in dem in den Figuren 1 bis 21 dargestellten ersten Ausführungsbeispiel einen Getriebebeschlag, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 111 A1 beschrieben ist. Die vorliegende Erfindung ist jedoch nicht auf Getriebebeschläge beschränkt, sondern lässt sich - wie in Figur 22 dargestellt - auch mit an sich bekannten Rastbeschlägen kombinieren, deren Funktionsprinzip hinsichtlich eines Verriegelns zwischen einem ersten Beschlagteil und einem zweiten Beschlagteil beispielsweise aus der DE 10 2008 024 853 A1 bekannt ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Durch diese Abwälzbewegung werden das erste Beschlagteil 11 und das zweite Beschlagteil 12 relativ zueinander verdreht und dadurch die Neigung der Lehne 4 relativ zum Sitzteil 3 verändert. Der Insasse des Fahrzeugsitzes 1 kann somit die Lehnenneigung an seine individuellen Komfortbedürfnisse anpassen.

Der Komforteinstellbereich der Lehne ist begrenzt, indem ein fest mit dem sitzteilfesten Adapter 112 verbundener Anschlag 112a zwischen einen ersten Nocken 120 und einen zweiten Nocken 130 des ersten Beschlagteils 11 greift. Der erste Nocken 120 und der zweite Nocken stehen als Funktionsgeometrien in radialer Richtung über die kreisrunde Grundgeometrie des ersten Beschlagteils 11 über. Am ersten Nocken 120 ist eine dem Anschlag 112a zugewandte erste Anschlagfläche 120a und am zweiten Nocken 130 eine dem Anschlag 112a zugewandte zweite Anschlagfläche 130a ausgebildet, von denen jeweils eine in einem der beiden Endpunkten des Komfortverstellbereichs der Lehne an dem Anschlag 112a anliegt und ein weiteres Verstellen des Beschlags 10 verhindert. Der Abstand zwischen erster Anschlagfläche 120a und zweiter Anschlagfläche 130a ist größer als die Abmessung des zwischen diesen liegenden Anschlags 112a, wodurch der Komforteinstellbereich der Lehne definiert ist.

Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Das zweite Beschlagteil 12 weist konzentrisch zum Zahnrad 16 einen Kragen 19 auf. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das erste Beschlagteil 11 lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsring 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Jeder Beschlag 10 umfasst außer der besagten scheibenförmigen, als Getriebebeschlag ausgebildeten Einheit mit den darin enthaltenen Bauteilen auch noch eine Freischwenkvorrichtung. Am ersten Beschlagteil 11 ist auf dessen vom zweiten Beschlagteil 12 abgewandten Seite, mittels eines am ersten Beschlagteil 11 befestigten Lagerrings 71, ein drittes Beschlagteil 74 gelagert. Das im Wesentlichen plattenförmige dritte Beschlagteil 74 ist mit der Lehnenstruktur der Lehne 4 verbunden und für das zentrisch erfolgende Freischwenken relativ zum ersten Beschlagteil 11 um eine (durch den Lagerring 71 definierte) zentrale Achse A schwenkbar, die parallel zur Übertragungsstange 7 liegt. Sofern nicht abweichend beschrieben verlaufen sämtliche nachfolgend beschriebenen Drehungen um parallel zur Achse A ausgerichtete Drehachsen. Die Achse A definiert zudem die verwendeten Begriffe "axial" und "radial".

Eine umlaufende Lagerfläche 71f des Lagerrings 71 weist gleichmäßig über den Umfang verteilt drei radial nach außen gerichtete Anlaufnocken 71a auf. Die Anlaufnocken 71a unterbrechen die ansonsten kreiszylindrische, radial nach außen weisende Lagerfläche 71f des Lagerrings 71. Jeder der drei Anlaufnocken 71a hat vorzugsweise die gleiche geometrische Kontur, so dass nachfolgend nur ein Anlaufnocken 71a beschrieben ist.

Ausgehend von der kreiszylindrischen Grundkontur der Lagerfläche 71f des Lagerrings 71 wächst der Anlaufnocken 71a in Umfangsrichtung zunächst in einem flachen Winkel stetig radial nach außen an, vorliegend über einen Bereich von ungefähr 10° bis 15°, so dass eine erste Anlauffläche 71b gebildet ist. Über einen anschließenden Bereich von ungefähr 3° bis 10° in Umfangsrichtung verläuft die Kontur des Anlaufnockens 71a stetig abfallend und geht wieder in die kreisrunde Grundkontur der Lagerfläche 71f des Lagerrings 71 über. Die drei Anlaufnocken 71a sind in Umfangsrichtung vorzugsweise um jeweils genau 120° zueinander versetzt.

Das dritte Beschlagteil 74 weist eine mit Ausnahme der nachfolgend beschriebenen Abweichungen kreisrunde Öffnung 74f auf, die in sich die kreiszylindrische Lagerfläche 71f bildet. Zum Zusammenwirken mit den Anlaufnocken 71a weist die Öffnung 74f drei Erhebungen 74a auf. Jede der drei Erhebungen 74a hat vorzugsweise die gleiche geometrische Kontur, so dass nachfolgend nur eine Erhebung 74a beschrieben ist.

Ausgehend von der kreiszylindrischen Grundkontur der Öffnung 74f, die eine Begrenzung der Öffnung 74 f darstellt, wächst die Erhebung 74a in Umfangsrichtung der Öffnung 74f zunächst in einem flachen Winkel stetig radial nach innen an, vorliegend über einen Bereich von ungefähr 10° bis 15°, so dass eine zweite Anlauffläche 74b der Erhebung 74a gebildet ist. Über einen anschließenden Bereich von ungefähr 3° bis 10° in Umfangsrichtung verläuft die Kontur der Erhebung 74a stetig abfallend wieder in die kreisrunde Grundkontur der Öffnung 74f des dritten Beschlagteils 74. Die drei Erhebungen sind in Umfangsrichtung vorzugsweise um jeweils genau 120° zueinander versetzt.

Beim Gebrauch des Fahrzeugsitzes 1 ist das dritte Beschlagteil 74 mit dem ersten Beschlagteil 11 verriegelt. In dieser Relativstellung zwischen dem Lagerring 71 und dem dritten Beschlagteil 74 sind jeweils eine Anlauffläche 71b eines Anlaufnockens 71a und eine Anlauffläche 74b einer Erhebung 74a miteinander in nicht selbsthemmendem Kontakt. Dadurch wird das Spiel in der Lagerstelle zwischen dem Lagerring 71 und dem dritten Beschlagteil 74 herausgestellt.

Beim Vorschwenken des entriegelten dritten Beschlagteils 74 und somit der Lehne 4, löst sich der zuvor beschriebene Kontakt zwischen den Anlaufflächen 71b der Anlaufnocken 71a und den Anlaufflächen 74b der Erhebungen 74a voneinander und die Lagerstelle hat ein für eine Relativbewegung zwischen dem Lagerring 71 und dem dritten Beschlagteils 74 vorteilhaftes Spiel.

Zum Verriegeln des dritten Beschlagteils 74 mit dem ersten Beschlagteil 11 weist das erste Beschlagteil 11 als weitere Funktionsgeometrie einen in radialer Richtung über die kreisrunde Grundgeometrie des ersten Beschlagteils 11 überstehenden Vorsprung 140 auf, der mit einer Klinke 80 zusammen wirkt, die mittels eines Lagerbolzens 82 am dritten Beschlagteil 74 auf der dem ersten Beschlagteil 11 zugewandten Seite drehbar gelagert ist. Der Lagerbolzen 82 weist einzelne Abschnitte auf, die entweder jeweils weitgehend rotationssymmetrisch zu jeweils einer zur Achse A parallelen Achse sind, oder, wie nachfolgend noch näher beschrieben, exzentrisch zueinander liegen können.

Die Klinke 80 hat eine einer L-Form ähnliche Grundgeometrie mit einem langen Schenkel und einem kurzen Schenkel. Ein kreisrundes Loch im vom kurzen Schenkel abgewandten Endbereich des langen Schenkels dient der Aufnahme des Lagerbolzens 82 und bildet gemeinsam mit diesem die Lagerstelle der Klinke 80 in einem ersten Gelenkpunkt D1 am dritten Beschlagteil 74. Im Verbindungsbereich zwischen dem langen Schenkel und dem kurzen Schenkel der Klinke 80 ist ein Verriegelungsnocken 80a zum Zusammenwirken mit einer Verriegelungsfläche 140b des Vorsprungs 140 ausgeformt. Um das dritte Beschlagteil 74 mit dem ersten Beschlagteil 11 zu verriegeln, stützt sich der Verriegelungsnocken 80a in Freischwenkrichtung an der Verriegelungsfläche 140b des Vorsprungs 140 ab.

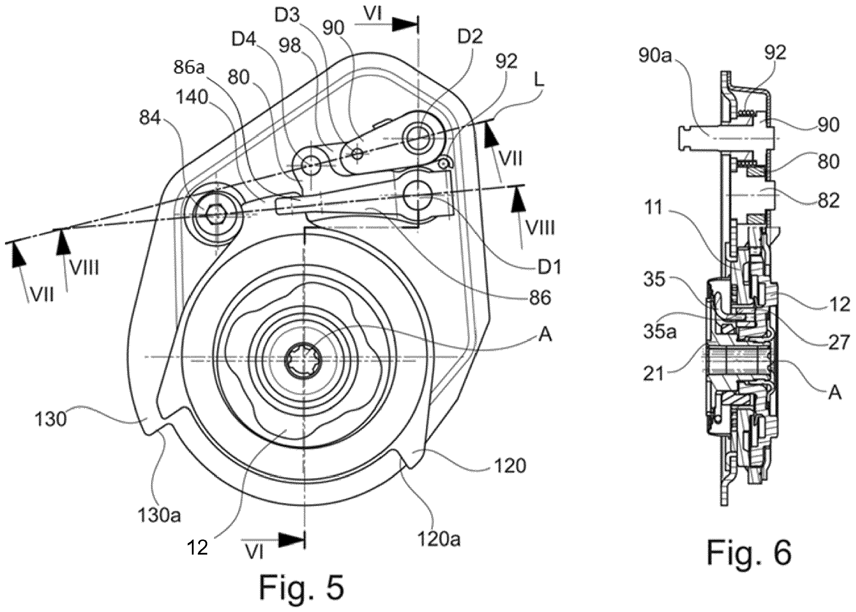

Ein als Anschlag dienender Exzenterbolzen 84 am dritten Beschlagteil 74 dient zur Begrenzung der Schwenkbewegung des dritten Beschlagteils 74 in Rückwärts-Schwenkrichtung der Lehne 2 (in Fig. 5, 9, 10, 11, 12, 13, 14, 15, 16, 17 und 21 gegen den Uhrzeigersinn), indem der Exzenterbolzen 84 beim Wiedererreichen der Gebrauchsstellung der Lehne 4 nach Beendigung des Freischwenkens gegen eine Abstützfläche 140a des Vorsprungs 140 anläuft. In dieser Stellung liegen auch die Anlaufflächen 71b, 74b jeweils aneinander an. Der Exzenterbolzen 84 weist einzelne Abschnitte auf, die jeweils weitgehend rotationssymmetrisch zu jeweils einer zur Achse A parallelen Achse sind. Zum Ausgleich von Fertigungstoleranzen ist der Exzenterbolzen 84 in seiner axialen Richtung gestuft mit zueinander exzentrischen, weitgehend zylinderförmigen Scheiben ausgeformt. Ein in ein kreisrundes Loch des dritten Beschlagteils 74 eingesteckter, kreiszylindrisch geformter erster Bolzenabschnitt 84a des Exzenterbolzens 84 ist in radialer Richtung um eine erste Exzentrizität E1 versetzt zu einem kreiszylindrisch geformten zweiten Bolzenabschnitt 84b des Exzenterbolzens 84 angeordnet, wobei der zweiten Bolzenabschnitt 84b beim Wiederreichen der Gebrauchsposition in Anlage mit der Abstützfläche 140a kommt. Ein Profil 84c, beispielsweise ein Innensechskant oder ein anderes Innenprofil, in dem Exzenterbolzen 84 dient dabei als Schnittstelle zu einem Verdrehwerkzeug mit einer komplementären Geometrie, beispielsweise einem Sechskantschlüssel.

Ein Sperrnocken 90 ist in einem vom ersten Gelenkpunkt D1 beabstandeten zweiten Gelenkpunkt D2 auf der dem ersten Beschlagteil 11 zugewandten Seite drehbar am dritten Beschlagteil 74 gelagert. Dazu weist der Sperrnocken 90 an einem Ende einen senkrecht vom Sperrnocken 90 abstehenden, parallel zur Achse A verlaufenden Achsstummel 90a auf, der mittels einer Buchse 94 in eine Öffnung des dritten Beschlagteils 74 eingesetzt ist. Das freie Ende des Achsstummels 90a durchragt das dritte Beschlagteil 74 und steht auf der dem ersten Beschlagteil 11 abgewandten Seite über die im Wesentlichen plattenförmige Grundgeometrie des dritten Beschlagteils 74 über. Das freie Ende des Achsstummels 90a ist profiliert, insbesondere polygonförmig ausgebildet. Ein mit einem entsprechenden Gegenprofil ausgebildetes Bauteil kann in axialer Richtung aufgeschoben werden, so dass eine drehfeste Verbindung zwischen dem Achsstummel 90a und dem aufgeschobenen Bauteil gegeben ist. Das aufgeschobene Bauteil ist vorliegend ein in den Figuren nicht dargestellter Hebel, der über einen Seilzuges mit einem im oberen Bereich der Lehne 4 befestigten Handhebel 8 in Wirkverbindung steht. Eine Betätigung des Handhebels 8 dreht den Achsstummel 90a und somit den Sperrnocken um den zweiten Gelenkpunkt D2.

Eine Koppel 98 mit ebener, länglicher Grundform ist mit einem ersten Ende in einem dritten Gelenkpunkt D3 mit dem vom Achsstummel 90a abgewandten Ende des Sperrnockens 90 verbunden. Das zweite Ende der Koppel 98 ist in einem vierten Gelenkpunkt D4 mit dem kurzen Schenkel der Klinke 80 verbunden.

Der dritte Gelenkpunkt D3 ist durch einen zylindrischen Zapfen 90b gebildet, der am vom Achsstummel 90a abgewandten Ende des Sperrnockens 90 parallel zur Achse A absteht und in ein Langloch des ersten Endes der Koppel 98 greift. Aufgrund der Paarung des zylindrischen Zapfens 90b mit dem Langloch der Koppel 98 ist der dritte Gelenkpunkt D3 als Drehschubgelenk ausgebildet und ermöglicht so neben einer reinen Drehbewegung auch eine durch die Langlochgeometrie begrenzte Translation zwischen Koppel 98 und Sperrnocken 90.

Der vierte Gelenkpunkt D4 ist durch einen Niet 96 gebildet, der durch ein kreisrundes Loch des zweiten Endes der Koppel 98 und ein kreisrundes Loch im Endbereich des kurzen Schenkels der Klinke 80 gesteckt und derart vernietet ist, dass ein reines Drehgelenk entsteht.

Die im ersten Gelenkpunkt D1 an dem dritten Beschlagteil 74 gelagerte Klinke 80, der in dem zweiten Gelenkpunkt D2 an dem dritten Beschlagteil 74 gelagerte Sperrnocken 90 und die in dem dritten Gelenkpunkt D3 mit dem Sperrnocken 90 und in dem vierten Gelenkpunkt D4 mit der Klinke 80 gelenkig verbundene Koppel 98 definieren eine weitgehend ebene (am dritten Beschlagteil 74 angelenkte) Viergelenkkette, die dem Entriegeln und Verriegeln der Freischwenkfunktion dient.

Ein am dritten Beschlagteil 74 befestigter Deckel 78 deckt die vorgenannten Einzelteile der Freischwenkvorrichtung - wenigstens teilweise - ab und schützt diese vor Verschmutzung. Der Lagerbolzen 82, der Sperrnocken 90 und der Exzenterbolzen 84 sind zusätzlich zu deren Lagerung in den Löchern des dritten Beschlagteils 74 in einem gegenüberliegenden Lochbild im Deckel 78 abgestützt bzw. gelagert.

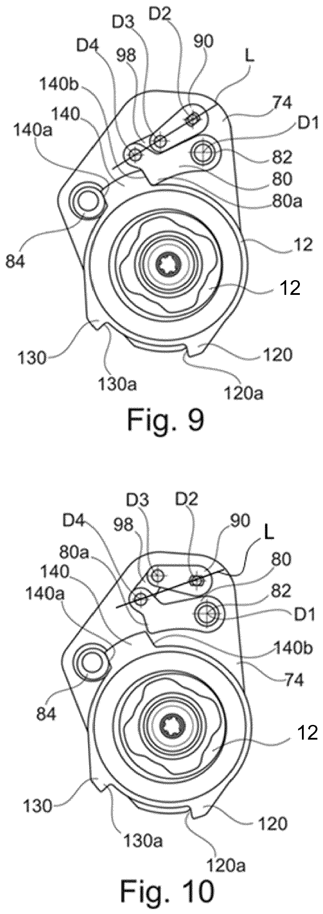

In den Figuren 9 bis 12 ist das Entriegeln und Verriegeln der Freischwenkvorrichtung dargestellt. Figur 9 zeigt den verriegelten Zustand der Gebrauchsposition. Die Klinke 80 ist eingefallen, d.h. der Verriegelungsnocken 80a stützt sich an der Verriegelungsfläche 140b ab. Eine zwischen Sperrnocken 90 und drittem Beschlagteil 74 wirksame Feder 92 beaufschlagt den Sperrnocken 90 mit einem Drehmoment in Richtung einer Anlage an die Klinke 80 (in Fig. 9 gegen Uhrzeigersinn). Die Klinke 80 wird dadurch unter normalen Gebrauchslasten in ihrer verriegelten Position gehalten. Der dritte Gelenkpunkt D3 liegt auf einer imaginären Verbindungslinie L zwischen dem zweiten Gelenkpunkt D2 und dem vierten Gelenkpunkt D4 oder (je nach Toleranzlage) geringfügig zwischen der Verbindungslinie L und der Klinke 80. Der Sperrnocken 90 und die Koppel 98 sind dadurch nahezu in einer Linie ausgerichtet. Der Nocken 90 stützt sich seitlich an der Klinke 80 ab, so dass sich der dritte Gelenkpunkt D3 nicht weiter in Richtung der Klinke 80 bewegen kann. Die Viergelenkkette befindet sich dadurch in einer gesperrten (Totpunkt-) Lage; auch hohe auf die Klinke 80 einwirkende Crashkräfte können die Klinke 80 aufgrund der Strecklage von Sperrnocken 90 und Koppel 98 und der Abstützung des Nockens 90 an der Klinke 80 nicht öffnen. Bei einer Ausbildung des dritten Gelenkpunktes D3 als Drehschubgelenk wird im Crashfall der kleine, begrenzte Translationsweg im Gelenk durchfahren, bis der Achsstummel 90a an einem Rand des Langloches der Koppel 98 anliegt.

Figur 10 zeigt den Beschlag 10 während des Entriegelns der Freischwenkfunktion. Durch Betätigung des Handhebels 8 wird der Sperrnocken 90 (in Figur 10 im Uhrzeigersinn) entgegen der Kraft der Feder 92 von der Klinke 80 weggeschwenkt.

Der dritte Gelenkpunkt D3 wird auf die von der Klinke 80 abgewandte Seite der Verbindungslinie L bewegt. Der Sperrnocken 90 zieht mittels der Koppel 98 die Klinke 80 aus der verriegelten Position, so dass der Verriegelungsnocken 80a der Klinke 80 nicht mehr an der Verriegelungsfläche 140b anliegt und das dritte Beschlagteil 74 samt Lehne 4 in Freischwenkrichtung beweglich ist. Die Lehne 4 kann freigeschwenkt werden. Falls der dritte Gelenkpunkt - wie zuvor beschrieben - im verriegelten Zustand der Freischwenkvorrichtung zwischen der Verbindungslinie L und der Klinke 80 liegt, so ermöglicht die Ausbildung des dritten Gelenkpunktes D3 als Drehschubgelenk dessen Überschreiten der Strecklage, also der Verbindungslinie L während des Entriegelungsvorgangs. In abgewandelter Ausführung ist statt des dritten Gelenkpunktes D3 einer der anderen Gelenkpunkte D1, D2, D4 als Drehschubgelenk ausgebildet. Die übrigen der Gelenkpunkte D1, D2, D3, D4 sind als reine Drehgelenke ausgebildet.

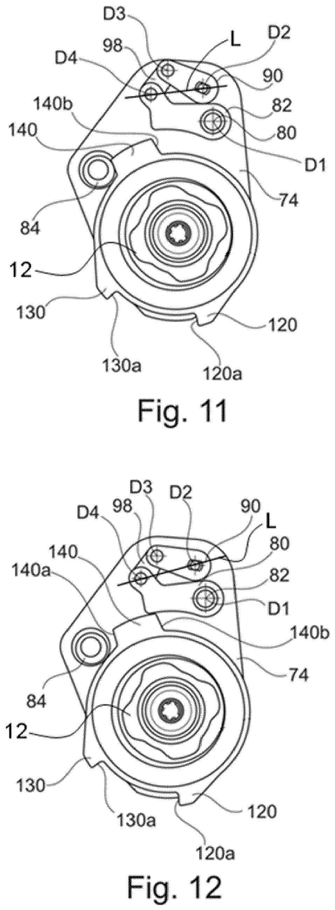

Um ein sicheres Entriegeln der Freischwenkfunktion unter allen Toleranzbedingungen zu ermöglichen, kann die Klinke 80 noch etwas weiter in die öffnende Richtung geschwenkt werden, wie dies aus Figur 11 ersichtlich ist.

Während des in Figur 12 dargestellten Freischwenkvorgangs liegt der Verriegelungsnocken 80a der Klinke 80 auf der radial äußeren Begrenzung des Vorsprungs 140 auf und gleitet auf dieser ab. Der Handhebel 8 kann somit bereits nach einem kleinen Freischwenkwinkel unbetätigt bleiben. Das Zurückschwenken und Verriegeln des dritten Beschlagteils 74 und somit der Lehne 4 erfolgt in umgekehrter Reihenfolge.

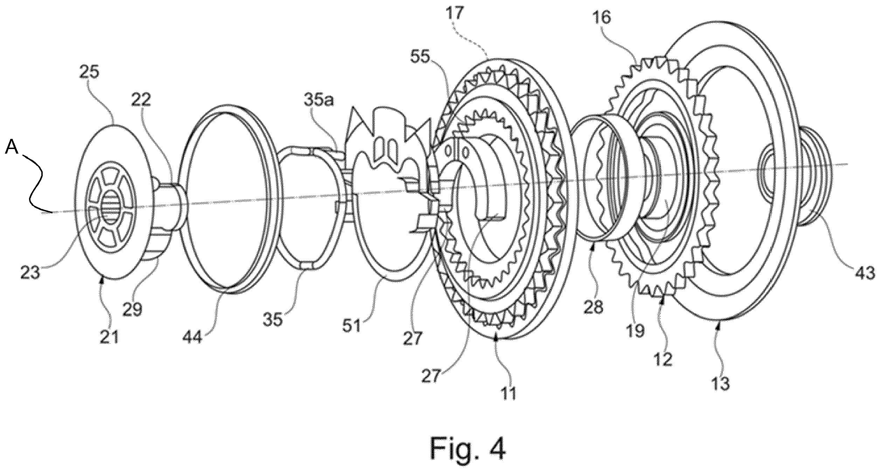

Eine in Figur 5 dargestellte, an dem Lagerbolzen 82 befestigte Rückhaltefeder 86 liegt mit einem Federarm 86a unter Vorspannung in axialer Richtung am Vorsprung 140 an. Wird das dritte Beschlagteil 74 weit nach vorne geschwenkt, so verlässt der Federarm 86a den Vorsprung 140 und federt in Richtung der Klinke 80, die dadurch an einem Einfallen hinter die Abstützfläche 140a gehindert wird. Erfindungsgemäß ist der Vorsprung 140 am ersten Beschlagteil 11 angeformt, d.h. er bildet einen einstückigen Bestandteil desselben in stofflicher Einheit und ist kein separat hergestelltes, nachträglich befestigtes Bauteil. Vorzugsweise ist auch der erste Nocken 120 und der zweite Nocken 130 am ersten Beschlagteil 11 (oder am Umklammerungsring 13 oder am Lagerring 71) angeformt. Die erfindungsgemäße Lösung wird begünstigt durch einen Umklammerungsring 13 mit einer im wesentlichen flachen Form, wie in Figur 4 und 6 dargestellt, der das erste Beschlagteil 11 allenfalls stellenweise übergreift und so auch am Rand des ersten Beschlagteils 11 radial abstehende Materialpartien ermöglicht.

Es sind verschiedene Ausführungen für den Vorsprung 140 und die Klinke 80 möglich. Die Klinke 80 kann in abgewandelter Ausführung mehrere Zähne aufweisen, die mit mehreren Zahnlücken im Vorsprung 140 zusammen wirken.

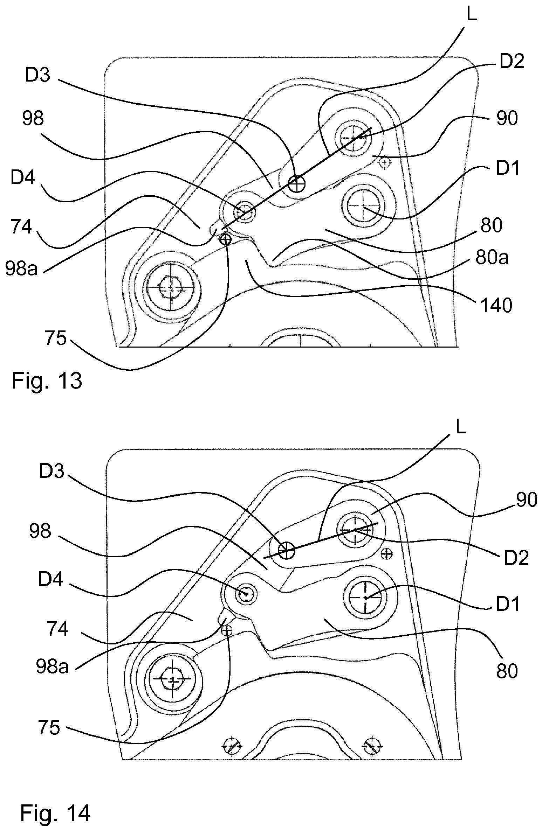

Eine Abwandlung des Ausführungsbeispiels ist in den Figuren 13 bis 16 dargestellt. Dieses abgewandelte Ausführungsbeispiel entspricht im Aufbau und in der Funktionsweise mit Ausnahme der nachfolgend beschriebenen zusätzlichen Merkmale und Funktionsabläufe dem zuvor beschriebenen Ausführungsbeispiel.

Die Koppel 98 weist ein vorliegend als Koppelnase 98a ausgebildetes erstes Abstützmittel auf. Grundsätzlich sind jedoch auch anders ausgebildete erste Abstützmittel denkbar, insbesondere Zapfen oder sonstige an die Koppel 98 angeprägte oder angefügte Zusatzgeometrien.

Die Koppelnase 98a ist einteilig mit der Koppel 98 ausgebildet. Der vierte Gelenkpunkt D4 befindet sich zwischen dem dritten Gelenkpunkt D3 und der Koppelnase 98a; der vierte Gelenkpunkt D4 muss dabei jedoch nicht auf einer gedachten Verbindungslinie zwischen dem dritten Gelenkpunkt D3 und der Koppelnase 98a liegen.

Ein zweites Abstützmittel ist fest mit dem dritten Beschlagteil 74 verbunden. Vorliegend ist das zweite Abstützmittel als ein Abstütznocken 75 ausgebildet. Grundsätzlich sind jedoch auch anders ausgebildete zweite Abstützmittel denkbar, insbesondere Zapfen oder sonstige an dem dritten Beschlagteil 74 angeprägte oder angefügte Zusatzgeometrien.

Figur 13 zeigt analog zur Figur 9 den verriegelten Zustand der Gebrauchsposition. Die Klinke 80 ist eingefallen. Die Koppelnase 98a liegt an dem Abstütznocken 75 an. Die nachfolgend beschriebene erfindungsgemäße Wirkung tritt jedoch auch ein, wenn in der Gebrauchsposition zwischen der Koppelnase 98a und dem Abstütznocken 75 etwas Luft ist, so dass diese nicht aneinander anliegen.

Figur 14 zeigt den Beschlag 10 während des Entriegelns der Freischwenkfunktion. Der Sperrnocken 90 wird wie zuvor beschrieben (in Figur 14 im Uhrzeigersinn) von der Klinke 80 weggeschwenkt. Aufgrund des dritten Gelenkpunktes D3 zwischen dem Sperrnocken 90 und der Koppel 98 wird auch die Koppel 98 (in Figur 14 gegen den Uhrzeigersinn) geschwenkt. Dabei stützt sich die Koppelnase 98a der Koppel 98 an dem Abstütznocken 75 des dritten Beschlagteils 74 ab. Im weiteren Bewegungsverlauf bildet die Abstützstelle zwischen der Koppelnase 98a und dem Abstütznocken zunächst einen Momentanpol, um den sich die Koppel 98 (gegen den Uhrzeigersinn) bewegt. Dadurch dass der vierte Gelenkpunkt D4 zwischen dem dritten Gelenkpunkt D3 und der Koppelnase 98a liegt, zieht der vierte Gelenkpunkt D4 die Klinke 80 aus deren verriegelter Position heraus.

Der Abstand zwischen dem dritten Gelenkpunkt D3 und dem vierten Gelenkpunkt D4 ist größer als der Abstand der Abstützstelle (zwischen der Koppelnase 98a und dem Abstütznocken 75) zu dem dritten Gelenkpunkt D3. Dadurch ist ein einfaches Hebelgetriebe definiert, dass die Kraft auf den vierten Gelenkpunkt D4 und somit die auf die Klinke 80 öffnend wirkende Kraft verstärkt, vorliegend um ungefähr den Faktor 3. Eine Haftreibung zwischen der Klinke 80 und dem Vorsprung 140 lässt sich dadurch besser überwinden.

Der zuvor beschriebene Hebeleffekt unterstützt den Bewegungsablauf der Viergelenkkette 74, 80, 98, 90. Die Viergelenkkette 74, 80, 98, 90 hat einen Getriebefreiheitsgrad von 1. Die Koppelnase 98a ist so ausgelegt, dass sie neben einer Drehbewegung um den Abstütznocken 75 zusätzlich an diesem entlang gleiten kann, damit die Bewegung der Viergelenkkette 74, 80, 98, 90 nicht blockiert.

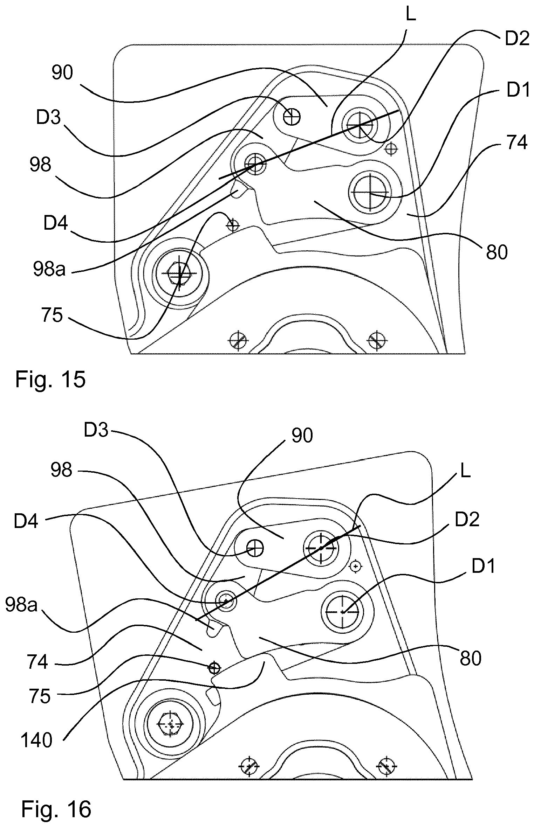

Im weiteren Bewegungsablauf zu einer in Figur 15 dargestellten geöffneten Stellung der Klinke 80 löst sich die Koppelnase 98a von dem Abstütznocken 75.

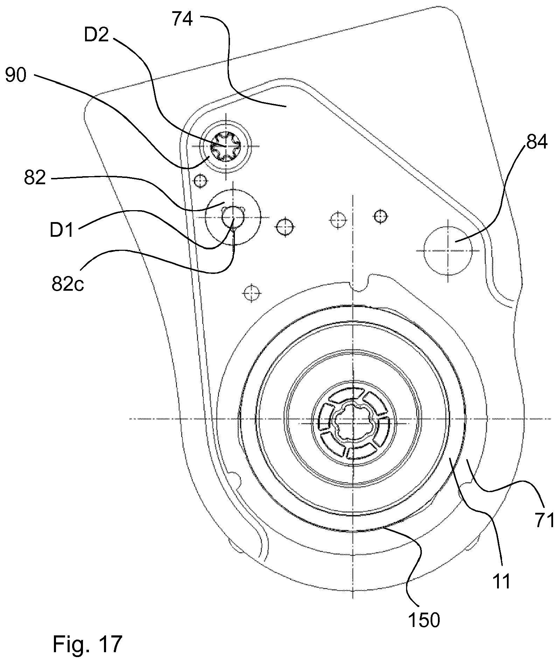

Anhand des in den Figuren 17 bis 21 mit verriegelter Freischwenkvorrichtung dargestellten Beschlags 10, wird nachfolgend die Montage des Beschlags 10 im Hinblick auf die Spielfreistellung der Freischwenkvorrichtung erläutert.

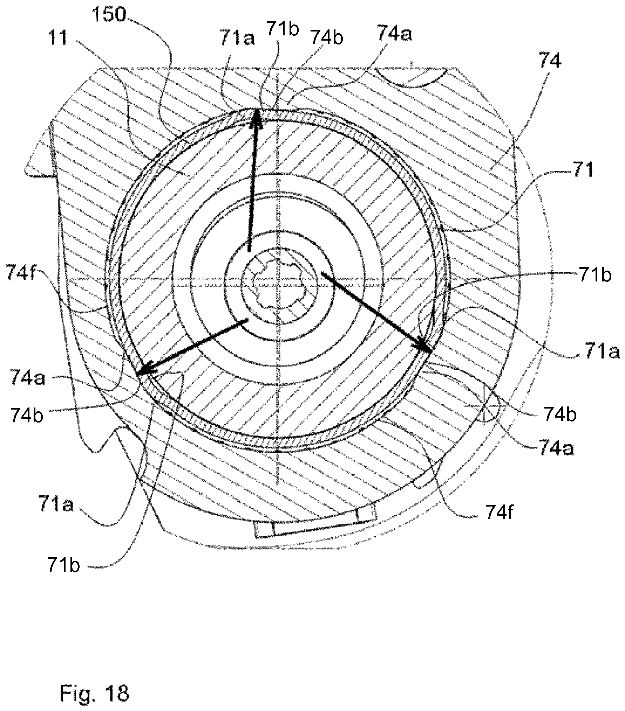

Figur 17 zeigt eine Draufsicht auf einen fertig montierten Beschlag 10 mit Blickrichtung auf den Lagerring 71. Figur 18 zeigt eine Figur 17 entsprechende Schnittdarstellung, wobei die Schnittebene senkrecht zur Achse A durch den Lagerring 71 verläuft, so dass insbesondere die ersten Anlaufflächen 71b und die zweiten Anlaufflächen 74b erkennbar sind.

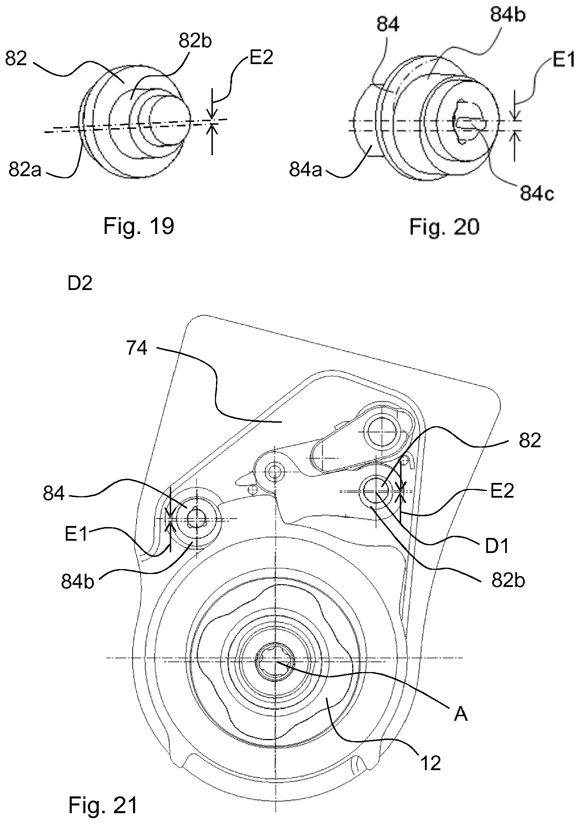

Figur 21 zeigt eine Draufsicht auf den verriegelten Beschlag 10 aus einer den Figuren 17 und 18 entgegengesetzten Blickrichtung.

Die Spielfreistellung der Freischwenkvorrichtung findet nach einer Vormontage der einzelnen Bauteile des Beschlags 10, jedoch vor einem endgültigen Fixieren des Lagerrings 71 an dem ersten Beschlagteil 11 und insbesondere vor einem endgültigen Fixieren des Lagerbolzens 82 und des Exzenterbolzens 84 statt. Zur Spielfreistellung der Freischwenkvorrichtung des Beschlages 10 wird eine spielfreie, verriegelte Gebrauchsstellung der Freischwenkvorrichtung erzeugt.

Zunächst wird durch Drehen des auf einen Absatz des ersten Beschlagteils 11 aufgesteckten Lagerrings 71 um die Achse A die Relativposition des Lagerrings 71 relativ zum ersten Beschlagteil 11 eingestellt und der Lagerring 71 anschließend in dieser Lage an dem ersten Beschlagteil 11 fixiert, vorzugsweise mittels einer Schweißnaht 150, beispielsweise einer Laserschweißnaht 150, verschweißt.

Dazu wird zunächst die Relativposition zwischen dem ersten Beschlagteil 11 und dem dritten Beschlagteil 74, die einer verriegelten Freischwenkvorrichtung entspricht, annähernd korrekt voreingestellt. Anschließend wird der Lagerring 71 relativ zum dritten Beschlagteil 74 um die Achse A so weit gedreht, bis die Anlaufflächen 71b der Anlaufnocken 71a und die Anlaufflächen 74b der Erhebungen 74a spielfrei aneinander anliegen. Anschließend wird der Lagerring 71 in dieser Position mit dem ersten Beschlagteil 11 verschweißt.

In einem weiteren Montageschritt wird der Exzenterbolzen 84 eingestellt und fixiert, vorzugsweise mit dem dritten Beschlagteil 74 verschweißt. Dazu wird der Exzenterbolzen 84 um den in das dritte Beschlagteil 74 eingesteckten ersten Bolzenabschnitt 84a gedreht, so dass sich der Mittelpunkt des in Anlage mit der Abstützfläche 140a bringbaren exzentrischen zweiten Bolzenabschnitts 84b auf einer Kreisbahn bewegt, dessen Radius einer ersten Exzentrizität E1 entspricht. Der Exzenterbolzen 84 wird gegenüber dem dritten Beschlagteil 74 soweit verdreht, bis er spielfrei an dem Verriegelungsnocken 80a der Klinke 80 anliegt Anschließend wird der Exzenterbolzen 84 am dritten Beschlagteil 74 fixiert, insbesondere mit diesem verschweißt.

Zum Ausgleich von Fertigungstoleranzen kann zusätzlich auch der Lagerbolzen 82 entsprechend exzentrisch gestuft aufgebaut sein, das heißt eine zweite Exzentrizität E2 aufweisen. Ein in ein kreisrundes Loch des dritten Beschlagteils 74 eingesteckter, kreiszylindrischer erster Lagerbolzenabschnitt 82a des Lagerbolzens 82 hat dann eine Mittelachse, die radial versetzt zu einer den ersten Gelenkpunkt D1 definierenden, parallelen Mittelachse eines der Lagerung der Klinke 80 dienenden zweiten Lagerbolzenabschnitts 82b ist. Dadurch ist die zweite Exzentrizität E2 des Lagerbolzens 82 definiert. Bei einer Drehung des Lagerbolzens 82 um den in das dritte Beschlagteil 74 eingesteckten ersten Lagerbolzenabschnitt 82a bewegt sich der erste Gelenkpunkt D1 auf einer Kreisbahn, dessen Radius der zweiten Exzentrizität E2 entspricht. Bei der Montage des Beschlags wird der Lagerbolzen 82 gegenüber dem dritten Beschlagteil 74 soweit verdreht, bis der erste Gelenkpunkt D1 seine optimale Lage erreicht hat und die Klinke 80 mittels eines maximalen Eingriffs des Verriegelungsnockens 80a spielfrei an der Verriegelungsfläche 140b des Vorsprungs 140 in Eingriff steht, allerdings außerhalb des Winkelbereichs der Selbsthemmung. Ein Innenprofil 82c, beispielsweise ein Innensechskant oder ein anderes Innenprofil, in dem Lagerbolzen 82 dient dabei als Schnittstelle zu einem Verdrehwerkzeug mit einer komplementären Geometrie, beispielsweise einem Sechskantschlüssel. Anschließend wird der Lagerbolzen 82 am dritten Beschlagteil 74 fixiert, insbesondere mit diesem verschweißt.

Figur 22 zeigt ein zweites Ausführungsbeispiel eines Beschlags 10, dessen Beschlagteile 11 und 12 nach dem Prinzip eines an sich bekannten Rastbeschlags funktionieren, dessen Funktionsprinzip hinsichtlich eines Verriegelns zwischen dem ersten Beschlagteil 11 und dem zweiten Beschlagteil 22 beispielsweise aus der DE 10 2008 024 853 A1 bekannt ist. Die übrigen Bauteile entsprechen den zuvor beschriebenen Bauteilen des ersten Ausführungsbeispiels und dessen Abwandlung. Die zuvor beschriebenen Funktionsabläufe und Verfahrensschritte während der Montage sind auf das zweite Ausführungsbeispiel identisch übertragbar. Die in der vorstehenden Beschreibung, den Ansprüchen und den Zeichnungen offenbarten Merkmale können sowohl einzeln als auch in Kombination für die Verwirklichung der Erfindung entsprechend des durch die Ansprüche definierten Schutzbereichs in ihren verschiedenen Ausgestaltungen von Bedeutung sein.

### Bezugszeichenliste

- 1: Fahrzeugsitz
- 3: Sitzteil
- 4: Lehne
- 5: Handrad
- 7: Antriebswelle
- 8: Handhebel
- 10: Beschlag
- 11: erstes Beschlagteil
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 51: Sperrfeder
- 55: Verzahnung
- 71: Lagerring
- 71a: Anlaufnocken
- 71b: erste Anlauffläche
- 71f: Lagerfläche
- 74: drittes Beschlagteil
- 74a: Erhebung
- 74b: zweite Anlauffläche
- 74f: Öffnung
- 75: zweites Abstützmittel, Abstütznocken
- 78: Deckel
- 80: Klinke
- 80a: Verriegelungsnocken
- 82: Lagerbolzen
- 82a: erster Lagerbolzenabschnitt
- 82b: zweiter Lagerbolzenabschnitt
- 82c: Innenprofil
- 84: Exzenterbolzen
- 84a: erster Bolzenabschnitt
- 84b: zweiter Bolzenabschnitt
- 84c: Profil
- 86: Rückhaltefeder
- 86a: Federarm
- 90: Sperrnocken
- 90a: Achsstummel
- 90b: Zapfen
- 92: Feder
- 94: Buchse
- 96: Niet
- 98: Koppel
- 98a: erstes Abstützmittel, Koppelnase
- 112: Adapter
- 112a: Anschlag
- 120: erster Nocken
- 120a: erste Anschlagfläche
- 130: zweiter Nocken
- 130a: zweite Anschlagfläche
- 140: Vorsprung
- 140a: Abstützfläche
- 140b: Verriegelungsfläche
- 150: Schweißnaht
- A: Achse
- D1: erster Gelenkpunkt
- D2: zweiter Gelenkpunkt
- D3: dritter Gelenkpunkt
- D4: vierter Gelenkpunkt
- E1: erste Exzentrizität
- E2: zweite Exzentrizität
- L: Verbindungslinie (D2 zu D4)

## Patentansprüche

1. Beschlag (10) für einen Fahrzeugsitz, insbesondere für einen Kraftfahrzeugsitz, mit einem ersten Beschlagteil (11) und einem zweiten Beschlagteil (12), welche relativ zueinander verdrehbar sind und miteinander in Getriebeverbindung stehen, oder miteinander verriegelbar sind, und einem dritten Beschlagteil (74), welches relativ zu dem ersten Beschlagteil (11) auf einem an dem ersten Beschlagteil (11) befestigten Lagerring (71) um eine Achse (A) schwenkbar gelagert ist, wobei das dritte Beschlagteil (74) mittels einer in einem ersten Gelenkpunkt (D1) an dem dritten Beschlagteil (74) gelagerten Klinke (80) mit dem ersten Beschlagteil (11) oder einem mit dem ersten Beschlagteil (11) fest verbundenen Bauteil verriegelbar ist, wobei der Lagerring (71) mehrere Anlaufnocken (71a) aufweist, die mit mehreren Erhebungen (74a) des dritten Beschlagteils (74) derart zusammenwirken, dass bei verriegelter Klinke (80) ein freies Spiel in radialer Richtung zwischen dem Lagerring (71) und dem dritten Beschlagteil (74) minimiert ist,
**dadurch gekennzeichnet, dass**
das dritte Beschlagteil (74), ein in einem zweiten Gelenkpunkt (D2) an dem dritten Beschlagteil (74) gelagerter Sperrnocken (90), eine in einem dritten Gelenkpunkt (D3) mit dem Sperrnocken (90) und in einem vierten Gelenkpunkt (D4) mit der Klinke (80) gelenkig verbundene Koppel (98), und die Klinke (80), eine Viergelenkkette (74, 80, 98, 90) definieren.

2. Beschlag (10) nach Anspruch 1, **dadurch gekennzeichnet, dass** der Lagerring (71) drei Anlaufnocken (71a) und das dritten Beschlagteils (74) drei Erhebungen (74a) aufweist.

3. Beschlag (10) nach Anspruch 1 oder 2, **dadurch gekennzeichnet, dass** an dem dritten Beschlagteil (74) ein Exzenterbolzen (84) befestigt ist und im verriegelten Zustand der Klinke (80) der Exzenterbolzen spielfrei an einem Vorsprung (140) des ersten Beschlagteils (11) anliegt.

4. Beschlag (10) nach Anspruch 3, **dadurch gekennzeichnet, dass** der Exzenterbolzen (84) einen sich parallel zur Achse (A) erstreckenden ersten Bolzenabschnitt (84a) umfasst, der in eine Öffnung des dritten Beschlagteils (74) eingesteckt ist, und einen sich parallel zur Achse (A) erstreckenden zweiten Bolzenabschnitt (84b) umfasst, der im verriegelten Zustand der Klinke (80) spielfrei an dem Vorsprung (140) anliegt, und der erste Bolzenabschnitt (84a) und der zweite Bolzenabschnitt (84b) in radialer Richtung um eine erste Exzentrizität (E1) versetzt zueinander angeordnet sind.

5. Beschlag (10) nach einem der Ansprüche 1 bis 4, **dadurch gekennzeichnet, dass** der erste Gelenkpunkt (D1) durch einen Lagerbolzen (82) gebildet ist und der Lagerbolzen (82) einen sich parallel zur Achse (A) erstreckenden ersten Lagerbolzenabschnitt (82a) umfasst, der in eine Öffnung des dritten Beschlagteils (74) eingesteckt ist, und einen sich parallel zur Achse (A) erstreckenden zweiten Lagerbolzenabschnitt (82b) umfasst, der die Klinke (80) lagert, und der erste Lagerbolzenabschnitt (82a) und der zweite Lagerbolzenabschnitt (82b) in radialer Richtung um eine zweite Exzentrizität (E2) versetzt zueinander angeordnet sind.

6. Beschlag (10) nach einem der Ansprüche 1 bis 5, **dadurch gekennzeichnet, dass** mindestens einer der Gelenkpunkte (D1, D2, D3, D4) der Viergelenkkette (74, 80, 98, 90) als Drehschubgelenk ausgebildet ist und die übrigen Gelenkpunkte (D1, D2, D3, D4) als Drehgelenke ausgebildet sind.

7. Beschlag (10) nach einem der Ansprüche 1 bis 6, **dadurch gekennzeichnet, dass** eine Feder (92) die Viergelenkkette (74, 80, 98, 90) in Richtung der verriegelten Position der Klinke (80) vorspannt.

8. Beschlag (10) nach einem der Ansprüche 1 bis 7, **dadurch gekennzeichnet, dass** im verriegelten Zustand der Klinke (80) der dritte Gelenkpunkt (D3) auf einer imaginären Verbindungslinie (L) liegt, die zwischen dem zweiten Gelenkpunkt (D2) und dem vierten Gelenkpunkt (D4) verläuft, und während des Entriegelungsvorgangs der Klinke (80) der dritte Gelenkpunkt (D3) mittels der Viergelenkkette (74, 80, 98, 90) auf die von der Klinke (80) abgewandte Seite der Verbindungslinie (L) bewegt wird.

9. Beschlag (10) nach einem der Ansprüche 1 bis 7, **dadurch gekennzeichnet, dass** im verriegelten Zustand der Klinke (80) der dritte Gelenkpunkt (D3) zwischen einer imaginären Verbindungslinie (L), die zwischen dem zweiten Gelenkpunkt (D2) und dem vierten Gelenkpunkt (D4) verläuft, und der Klinke (80) liegt, und während des Entriegelungsvorgangs der Klinke (80) der dritte Gelenkpunkt (D3) mittels der Viergelenkkette (74, 80, 98, 90) auf die von der Klinke (80) abgewandte Seite der Verbindungslinie (L) bewegt wird.

10. Verfahren zur Montage eines Beschlags (10) nach einem der Ansprüche 1 bis 9, umfassend mindestens die folgenden Verfahrensschritte:
a) Vorpositionieren des ersten Beschlagteils (11), des dritten Beschlagteils (74) und des Lagerrings (71) in eine Relativlage zueinander, die zumindest annähernd einer verriegelten Position der Klinke (80) entspricht,
b) Verdrehen des Lagerrings (71) um die Achse (A) relativ zu dem dritten Beschlagteil (74), bis die Anlaufnocken (71a) und die Erhebungen (74a) spielfrei aneinander anliegen,
c) anschließendes Fixieren des Lagerrings (71) an dem ersten Beschlagteil (11).

11. Verfahren nach Anspruch 10 **dadurch gekennzeichnet, dass** das Fixieren des Lagerrings (71) an dem ersten Beschlagteil (11) mittels Laserschweißens erfolgt.

12. Verfahren nach Anspruch 10 oder 11 **dadurch gekennzeichnet, dass** in einem weiteren Verfahrensschritt ein Exzenterbolzen (84) soweit gedreht wird, bis der Exzenterbolzen (84) spielfrei an einem Vorsprung des ersten Beschlagteils (11) oder eines mit dem ersten Beschlagteil (11) verbundenen Bauteils anliegt und der Exzenterbolzen (84) anschließend in dieser Lage an dem dritten Beschlagteil (74) fixiert wird.

13. Verfahren nach einem der Ansprüche 10 bis 12, **dadurch gekennzeichnet, dass** der erste Gelenkpunkt (D1) durch einen Lagerbolzen (82) gebildet ist und der Lagerbolzen (82) einen sich parallel zur Achse (A) erstreckenden ersten Lagerbolzenabschnitt (82a) umfasst, der in eine Öffnung des dritten Beschlagteils (74) eingesteckt ist, und einen sich parallel zur Achse (A) erstreckenden zweiten Lagerbolzenabschnitt (82b) umfasst, der die Klinke (80) lagert, und der Lagerbolzen (82) soweit gedreht wird, bis die Klinke (80) spielfrei an einem Vorsprung (140) anliegt und der Lagerbolzen (82) anschließend in dieser Lage an dem dritten Beschlagteil (74) fixiert wird.

14. Fahrzeugsitz (1) mit einem Sitzteil (3) und einer Lehne (4), die mittels eines Beschlags nach einem der Ansprüche 1 bis 9 miteinander verbunden sind.

## Claims

1. Fitting (10) for a vehicle seat, in particular for a motor vehicle seat, having a first fitting part (11) and a second fitting part (12) which are rotatable relative to one another and are in geared connection with one another, or are lockable with one another, and a third fitting part (74) which is mounted on a bearing ring (71), which is fastened on the first fitting part (11), so as to be pivotable about an axis (A) relative to the first fitting part (11), wherein the third fitting part (74) is lockable with the first fitting part (11), or with a component which is fixedly connected to the first fitting part (11), by means of pawl (80) which is mounted in a first pivot point (D1) on the third fitting part (74), wherein the bearing ring (71) comprises several run-up cams (71a) which interact with several elevations (74a) of the third fitting part (74) in such a manner that, with the pawl (80) locked, free play in the radial direction between the bearing ring (71) and the third fitting part (74) is minimized,
**characterized in that**
the third fitting part (74), a blocking cam (90) which is mounted in a second pivot point (D2) on the third fitting part (74), a coupler (98) which is flexibly connected to the blocking cam (90) in a third pivot point (D3) and to the pawl (80) in a fourth pivot point (D4), and the pawl (80) define a four-pivot chain (74, 80, 98, 90) .

2. Fitting (10) according to Claim 1, **characterized in that** the bearing ring (71) comprises three run-up cams (71a) and the third fitting part (74) comprises three elevations (74a).

3. Fitting (10) according to Claim 1 or 2, **characterized in that** an eccentric bolt (84) is fastened on the third fitting part (74) and, with the pawl (80) in the locked state, the eccentric bolt abuts against a projection (140) of the first fitting part (11) in a play-free manner.

4. Fitting (10) according to Claim 3, **characterized in that** the eccentric bolt (84) includes a first bolt portion (84a) which extends parallel to the axis (A) and is inserted into an opening of the third fitting part (74), and includes a second bolt portion (84b) which extends parallel to the axis (A) and, with the pawl (80) in the locked state, abuts in a play-free manner against the projection (140), and the first bolt portion (84a) and the second bolt portion (84b) are arranged offset with respect to one another in the radial direction about a first eccentricity (E1).

5. Fitting (10) according to one of Claims 1 to 4, **characterized in that** the first pivot point (D1) is formed by a bearing bolt (82) and the bearing bolt (82) includes a first bearing bolt portion (82a) which extends parallel to the axis (A) and is inserted into an opening of the third fitting part (74), and includes a second bearing bolt portion (82b) which extends parallel to the axis (A) and bears the pawl (80), and the first bearing bolt portion (82a) and the second bearing bolt portion (82b) are arranged offset with respect to one another in the radial direction about a second eccentricity (E2).

6. Fitting (10) according to one of Claims 1 to 5, **characterized in that** at least one of the pivot points (D1, D2, D3, D4) of the four-pivot chain (74, 80, 98, 90) is realized as a turn-slide pivot joint and the remaining pivot points (D1, D2, D3, D4) are realized as rotary pivot joints.

7. Fitting (10) according to one of Claims 1 to 6, **characterized in that** a spring (92) pre-stresses the four-pivot chain (74, 80, 98, 90) in the direction of the locked position of the pawl (80).

8. Fitting (10) according to one of Claims 1 to 7, **characterized in that**, with the pawl (80) in the locked state, the third pivot point (D3) lies on an imaginary connecting line (L) which runs between the second pivot point (D2) and the fourth pivot point (D4), and during the unlocking operation of the pawl (80) the third pivot point (D3) is moved by means of the four-pivot chain (74, 80, 98, 90) onto the side of the connecting line (L) which is remote from the pawl (80).

9. Fitting (10) according to one of Claims 1 to 7, **characterized in that**, with the pawl (80) in the locked state, the third pivot point (D3) lies between an imaginary connecting line (L), which runs between the second pivot point (D2) and the fourth pivot point (D4), and the pawl (80), and during the unlocking operation of the pawl (80) the third pivot point (D3) is moved by means of the four-pivot chain (74, 80, 98, 90) onto the side of the connecting line (L) which is remote from the pawl (80).

10. Method for assembling a fitting (10) according to one of Claims 1 to 9, said method including at least the following method steps:
a) pre-positioning the first fitting part (11), the third fitting part (74) and the bearing ring (71) into a relative position with respect to one another, which at least approximately corresponds to a locked position of the pawl (80),
b) rotating the bearing ring (71) about the axis (A) relative to the third fitting part (74) until the run-up cams (71a) and the elevations (74a) abut against one another in a play-free manner,
c) then fixing the bearing ring (71) on the first fitting part (11).

11. Method according to Claim 10, **characterized in that** the fixing of the bearing ring (71) on the first fitting part (11) is effected by means of laser welding.

12. Method according to Claim 10 or 11, **characterized in that** in a further method step an eccentric bolt (84) is rotated until the eccentric bolt (84) abuts in a play-free manner against a projection of the first fitting part (11) or of a component which is connected to the first fitting part (11) and the eccentric bolt (84) is then fixed in said position on the third fitting part (74) .

13. Method according to one of Claims 10 to 12, **characterized in that** the first pivot point (D1) is formed by a bearing bolt (82) and the bearing bolt (82) includes a first bearing bolt portion (82a) which extends parallel to the axis (A) and is inserted into an opening of the third fitting part (74), and a second bearing bolt portion (82b) which extends parallel to the axis (A) and bears the pawl (80), and the bearing bolt (82) is rotated until the pawl (80) abuts in a play-free manner against a projection (140) and the bearing bolt (82) is then fixed in said position on the third fitting part (74).

14. Vehicle seat (1) having a seat part (3) and a backrest (4) which are connected together by means of a fitting according to one of Claims 1 to 9.

## Revendications

1. Ferrure (10) pour un siège de véhicule, en particulier pour un siège de véhicule automobile, dotée d'une première pièce de ferrure (11) et d'une deuxième pièce de ferrure (12), lesquelles peuvent tourner l'une par rapport à l'autre et sont reliées cinématiquement l'une à l'autre, ou peuvent être verrouillées l'une avec l'autre, et d'une troisième pièce de ferrure (74), laquelle est disposée en pivotement par rapport à la première pièce de ferrure (11) autour d'un axe (A) sur une bague de palier (71) fixée à la première pièce de ferrure (11),
dans laquelle la troisième pièce de ferrure (74) est verrouillable avec la première pièce de ferrure (11) ou avec un composant relié fixement à la première pièce de ferrure (11) au moyen d'un loquet (80) disposé dans un premier point de charnière (D1) sur la troisième pièce de ferrure (74),
dans laquelle la bague de palier (71) comporte plusieurs cames de lancement (71a), lesquelles coopèrent avec plusieurs élévations (74a) de la troisième pièce de ferrure (74) de telle sorte que lorsque le loquet (80) est verrouillé, un libre jeu dans la direction radiale entre la bague de palier (71) et la troisième pièce de ferrure (74) est minimisé,
**caractérisée en ce que** la troisième pièce de ferrure (74), une came de blocage (90) disposée dans un deuxième point de charnière (D2) sur la troisième pièce de ferrure (74), une bielle (98) reliée de manière articulée à la came de blocage (90) dans un troisième point de charnière (D3) et au loquet (80) dans un quatrième point de charnière (D4), et le loquet (80) définissent une chaîne à quatre joints articulés (74, 80, 98, 90).

2. Ferrure (10) selon la revendication 1, **caractérisée en ce que** la bague de palier (71) comporte trois cames de lancement (71a) et la troisième pièce de ferrure (74) comporte trois élévations (74a).

3. Ferrure (10) selon la revendication 1 ou 2, **caractérisée en ce qu'**un boulon excentrique (84) est fixé à la troisième pièce de ferrure (74) et le boulon excentrique touche sans jeu une avancée (140) de la première pièce de ferrure (11) dans l'état verrouillé du loquet (80).

4. Ferrure (10) selon la revendication 3, **caractérisée en ce que** le boulon excentrique (84) comprend une première section de boulon (84a) s'étendant parallèlement à l'axe (A), laquelle est insérée dans une ouverture de la troisième pièce de ferrure (74), et comprend une deuxième section de boulon (84b) s'étendant parallèlement à l'axe (A), laquelle s'appuie sans jeu sur l'avancée (140) dans l'état verrouillé du loquet (80), et la première section de boulon (84a) et la deuxième section de boulon (84b) sont agencées en décalage l'une par rapport à l'autre autour d'une première excentricité (E1) dans la direction radiale.

5. Ferrure (10) selon l'une des revendications 1 à 4, **caractérisée en ce que** le premier point de charnière (D1) est formé par un premier boulon de palier (82) et le boulon de palier (82) comprend une première section de boulon de palier (82a) s'étendant parallèlement à l'axe (A), laquelle est insérée dans une ouverture de la troisième pièce de ferrure (74), et une deuxième section de boulon de palier (82b) s'étendant parallèlement à l'axe (A), laquelle reçoit le loquet (80), et la première section de boulon de palier (82a) et la deuxième section de boulon de palier (82b) sont agencées en décalage l'une par rapport à l'autre autour d'une deuxième excentricité (E2) dans la direction radiale.

6. Ferrure (10) selon l'une des revendications 1 à 5, **caractérisée en ce qu'**au moins un des points de charnière (D1, D2, D3, D4) de la chaîne à quatre joints articulés (74, 80, 98, 90) est réalisé comme un tiroir rotatif et les autres points de charnière (D1, D2, D3, D4) sont réalisés comme joints tournants.

7. Ferrure (10) selon l'une des revendications 1 à 6, **caractérisée en ce qu'**un ressort (92) précontraint la chaîne à quatre joints articulés (74, 80, 98, 90) dans la direction de la position verrouillée du loquet (80).

8. Ferrure (10) selon l'une des revendications 1 à 7, **caractérisée en ce que**, dans l'état verrouillé du loquet (80), le troisième point de charnière (D3) se trouve sur une ligne de raccordement imaginaire (L) (laquelle s'étend entre le deuxième point de charnière (D2) et le quatrième point de charnière (D4)), et le troisième point de charnière (D3) est déplacé sur le côté de la ligne de raccordement (L) se détournant du loquet (80) au moyen de la chaîne à quatre joints articulés (74, 80, 98, 90) pendant l'opération de déverrouillage du loquet (80).

9. Ferrure (10) selon l'une des revendications 1 à 7, **caractérisée en ce que**, dans l'état verrouillé du loquet (80), le troisième point de charnière (D3) se trouve entre une ligne de raccordement imaginaire (L) (laquelle s'étend entre le deuxième point de charnière (D2) et le quatrième point de charnière (D4)) et le loquet (80), et le troisième point de charnière (D3) est déplacé sur le côté de la ligne de raccordement (L) se détournant du loquet (80) au moyen de la chaîne à quatre joints articulés (74, 80, 98, 90) pendant l'opération de déverrouillage du loquet (80).

10. Procédé de montage d'une ferrure (10) selon l'une des revendications 1 à 9, comprenant au moins les étapes de procédé suivantes :
a) prépositionnement de la première pièce de ferrure (11), de la troisième pièce de ferrure (74) et de la bague de palier (71) dans une position relative l'une par rapport à l'autre qui correspond au moins approximativement à une position verrouillée du loquet (80),
b) rotation de la bague de palier (71) autour de l'axe (A) par rapport à la troisième pièce de ferrure (74), jusqu'à ce que les cames de lancement (71a) et les élévations (74a) se touchent les unes les autres sans jeu,
c) fixation consécutive de la bague de palier (71) à la première pièce de ferrure (11).

11. Procédé selon la revendication 10, **caractérisé en ce que** la fixation de la bague de palier (71) à la première pièce de ferrure (11) s'effectue au moyen du soudage laser.

12. Procédé selon la revendication 10 ou 11, **caractérisé en ce que** dans une étape de procédé ultérieure un boulon excentrique (84) est tourné jusqu'à ce que le boulon excentrique (84) touche sans jeu une avancée de la première pièce de ferrure (11) ou d'un composant relié à la première pièce de ferrure (11) et le boulon excentrique (84) est ensuite fixé à cet endroit à la troisième pièce de ferrure (74).

13. Procédé selon l'une des revendications 10 à 12, **caractérisé en ce que** le premier point de charnière (D1) est formé par un premier boulon de palier (82) et le boulon de palier (82) comprend une première section de boulon de palier (82a) s'étendant parallèlement à l'axe (A), laquelle est insérée dans une ouverture de la troisième pièce de ferrure (74), et une deuxième section de boulon de palier (82b) s'étendant parallèlement à l'axe (A), laquelle reçoit le loquet (80), et le boulon de palier (82) est tourné jusqu'à ce que le loquet (80) touche sans jeu une avancée (140) et le boulon de palier (82) est ensuite fixé à cet endroit à la troisième pièce de ferrure (74).

14. Siège de véhicule (1) doté d'une assise (3) et d'un dossier (4), lesquels sont reliés l'un à l'autre au moyen d'une ferrure selon l'une des revendications 1 à 9.
